## Europäisches Patentamt
## European Patent Office
## Office européen des brevets

(19)

(11) Numéro de publication: **0 020 276**
**B1**

(12) **FASCICULE DE BREVET EUROPEEN**

(45) Date de publication du fascicule du brevet: **16.05.84**

(51) Int. Cl.³: **F 16 M 11/00, E 03 C 1/324**

(21) Numéro de dépôt: **80400776.3**

(22) Date de dépôt: **30.05.80**

(54) **Dispositif de fixation amovible d'une charge tel qu'un appareil sanitaire sur une paroi verticale et dispositif de montage d'un tel dispositif de fixation.**

(30) Priorité: **31.05.79 FR 7913965**

(43) Date de publication de la demande:
**10.12.80 Bulletin 80/25**

(45) Mention de la délivrance du brevet:
**16.05.84 Bulletin 84/20**

(84) Etats contractants désignés:
**AT BE CH DE GB IT LI LU NL SE**

(56) Documents cités:
**CH-A- 344 191**
**US-A- 689 539**
**US-A-2 761 640**

(73) Titulaire: **Anessi, Jacques**
**104, rue des Allobroges**
**F-38170 Seyssins (FR)**

(72) Inventeur: **Anessi, Jacques**
**104, rue des Allobroges**
**F-38170 Seyssins (FR)**

(74) Mandataire: **Derambure, Christian**
**Cabinet BUGNION ASSOCIES SARL 116,**
**boulevard Haussmann**
**F-75008 Paris (FR)**

Courier Press, Leamington Spa, England.

## Description

L'invention concerne un dispositif de fixation amovible d'une charge sur une paroi verticale et un dispositif de montage d'un tel dispositif de fixation.

Plus particulièrement, la charge est un appareil sanitaire tel qu'un ballon d'eau chaude et la paroi verticale est un mur.

Jusqu'à présent la fixation de telles charges s'obtient au moyen de pattes, notamment deux pattes supérieures et deux pattes inférieures pourvues d'encoches, avec lesquelles coopèrent des pièces d'ancrage telles que vis, tirefond, etc. Un tel mode de fixation présente de nombreux inconvénients. Tout d'abord, l'utilisateur doit placer correctement, avec beaucoup d'exactitude les organes d'ancrage. Ensuite, l'utilisateur doit placer correctement les pattes devant les organes d'ancrage, simultanément ce qui est toujours difficile, notamment lorsque la charge est lourde ou encombrante. En tout état de cause, l'utilisateur doit supporter la masse totale de la charge.

Le brevet suisse n° 344.191 décrit un meuble d'école comportant un tableau coulissable verticalement et sous ce tableau est prévu une planche reliée et articulée avec ce dernier, pouvant être dépliée d'une position verticale à une position horizontale de travail. Le dispositif comporte un cadre et des moyens de manoeuvre. Cependant, ces moyens de manoeuvre n'ont pas pour but d'éviter à l'utilisateur de supporter la masse de la planche pendant la manoeuvre, le poids de celle-ci étant réduit.

L'invention vise à remédier à ces inconvénients et à cet effet, elle propose un dispositif de fixation amovible d'une charge, notamment d'un appareil sanitaire sur une paroi verticale, notamment un mur, comportant en premier lieu un premier cadre ou bâti rigide, plan, pouvant être associé rigidement à la paroi, pourvu de premiers moyens de guidage normalement verticaux et de moyens d'arrêt respectivement supérieurs et inférieurs interposés sur les premiers moyens de guidage et, en second lieu, un second cadre ou bâti rigide associé rigidement à la charge, pourvu de seconds moyens de guidage complémentaires des premiers moyens de guidage et susceptibles de coopérer avec eux sur une certaine course de coulissement vertical, ainsi que des moyens de blocage et de verrouillage respectivement supérieurs et inférieurs associés aux seconds moyens de guidage susceptibles de coopérer respectivement avec les moyens d'arrêt supérieurs et inférieurs pour retenir en place la charge, caractérisé par le fait qu'il comporte en outre et en premier lieu des moyens support associés rigidement au premier cadre à sa partie supérieure et en second lieu des moyens d'accrochage associés rigidement au second cadre ou bâti à sa partie normalement inférieure, les moyens support et les moyens d'accrochage étant destinés à coopérer avec un dispositif de montage.

L'invention concerne aussi un dispositif de montage d'un tel dispositif de fixation qui comporte un support rigide formant une ligne totalement ou partiellement plane ou gauche, rectiligne ou curviligne, déformable ou non, extensible ou non, monobloc ou non, terminé d'une part par une partie extrême de tête et d'autre part par une partie extrême de pied; un organe de liaison souple et inextensible associé au support rigide pour pouvoir coulisser le long de celui-ci; un organe de blocage associé à la partie extrême libre saillante de tête de l'organe de liaison; un organe de stockage de l'organe de liaison fixé au support; des moyens de commandes amovibles ou non, susceptibles d'être associés à l'organe de stockage pour commander le coulissement de l'organe de liaison dans un sens ou dans l'autre.

Grâce à un tel dispositif de fixation et un tel dispositif de montage suivant l'invention, les opérations de fixation d'une charge peuvent être rendues particulièrement simples et commodes, ne nécessitant aucun personnel hautement spécialisé. De plus, l'utilisateur n'a pas à supporter la totalité du poids de la charge. Egalement, on comprend que le montage est susceptible d'être décomposé en deux phases à savoir une phase de fixation du premier cadre et une phase de mise en place du deuxième cadre sur le premier cadre.

Bien entendu, il est clair que l'invention est applicable à tout type de charge, notamment mais non exclusivement les appareils sanitaires, par exemple un ballon d'eau chaude.

Les autres caractéristiques et avantages de l'invention résulteront de la description qui suivra en référence aux dessins annexés dans lesquels:

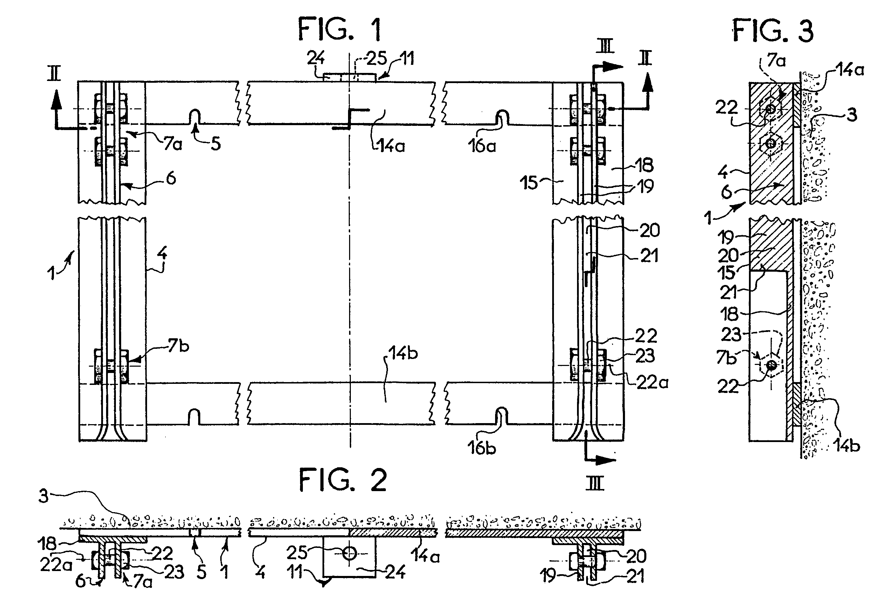

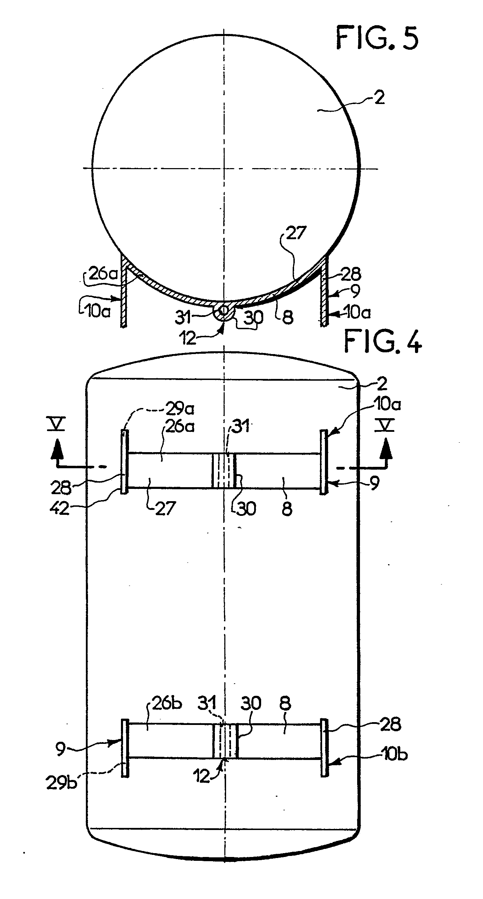

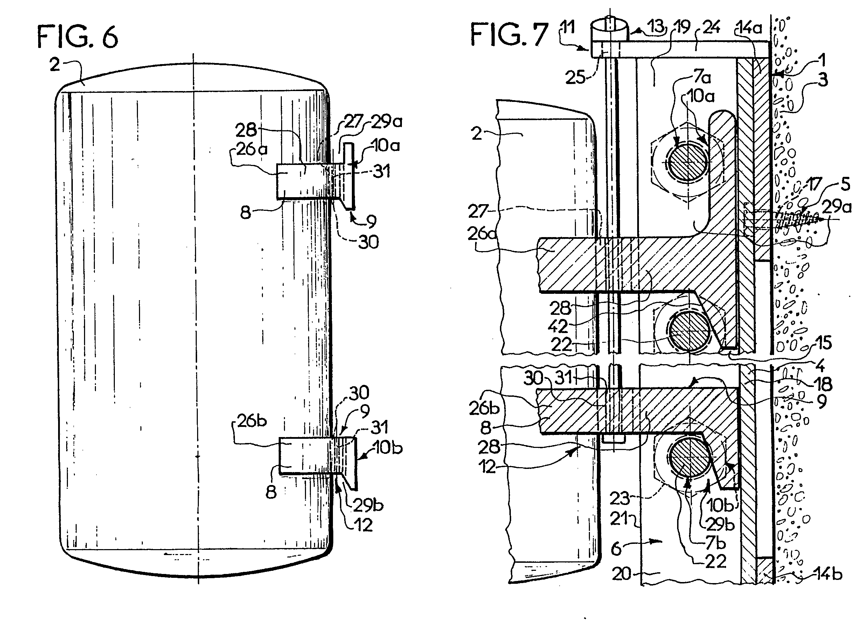

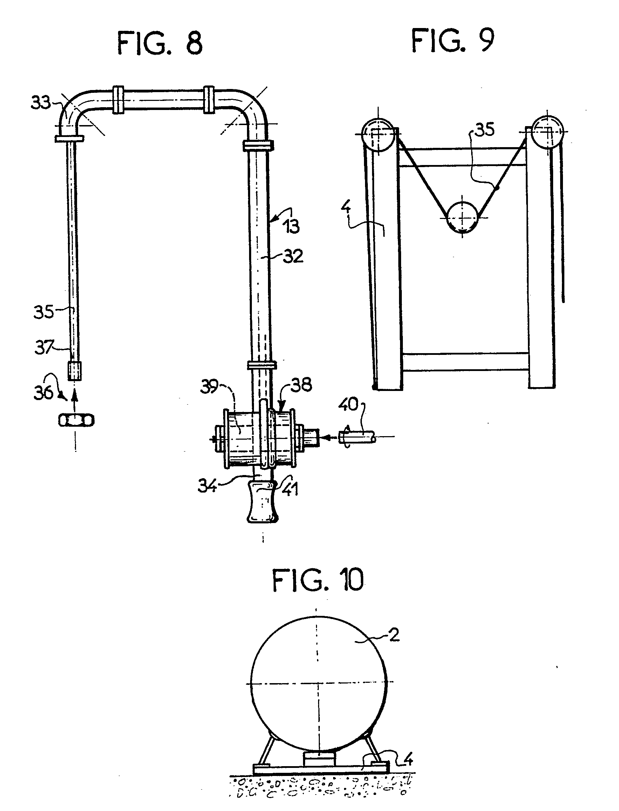

La figure 1 est une vue schématique, partielle, d'un premier cadre appartenant au dispositif de fixation suivant l'invention, le plan de figure étant le plan d'une paroi verticale; la figure 2 est une vue schématique, partielle, en coupe, suivant la ligne II—II de la figure 1; la figure 3 est une vue schématique, partielle, en coupe, suivant la ligne III—III de la figure 1; la figure 4 est une vue schématique, en élévation d'une charge comportant un second cadre du dispositif de fixation suivant l'invention; la figure 5 est une vue schématique en coupe suivant la ligne V—V de la figure 1; la figure 6 est une vue schématique, de côté, de la charge comportant le second cadre du dispositif de fixation suivant l'invention; la figure 7 est une vue schématique en coupe par un plan vertical illustrant un dispositif de fixation suivant l'invention et partiellement un dispositif de montage d'un tel dispositif de fixation; la figure 8 est une vue schématique, en élévation, d'un dispositif de montage suivant l'invention; la figure 9 est une vue schématique, en élévation, d'une variante du dispositif de fixation; la figure 10 est une vue schématique, de dessus, d'une autre variante d'un dispositif de fixation suivant l'invention.

Suivant l'invention, il est proposé un dispositif de fixation 1, amovible, d'une charge 2 sur une paroi verticale 3. La charge 2 peut faire l'objet de nombreuses variantes. En particulier, il s'agit d'un appareil sanitaire, par exemple un ballon d'eau chaude. La paroi verticale 3 est constituée notamment par un mur.

Le dispositif de fixation 1 comprend en premier lieu un premier cadre ou bâti 4, rigide, plan, comportant des moyens 5 permettant sa fixation rigide à la paroi 3; des premiers moyens de guidage 6, normalement verticaux et des moyens d'arrêt respectivement supérieurs 7a et inférieurs 7b interposés sur les premiers moyens de guidage 6.

Le dispositif de fixation comprend également, en second lieu et en combinaison un second cadre ou bâti 8, rigide, associé rigidement à la charge 2, comportant des seconds moyens de guidage 9 complémentaires des premiers moyens de guidage 6; et des moyens de blocage et de verrouillage respectivement supérieurs 10a et inférieurs 10b associés aux seconds moyens de guidage 9, susceptibles de coopérer respectivement avec les moyens d'arrêt supérieurs 7a et inférieurs 7b sur une certaine course de coulissement vertical.

Le dispositif de fixation 1 suivant l'invention comprend en outre, suivant une forme d'exécution préférée en premier lieu des moyens support 11 associés rigidement au premier cadre 4 à sa partie supérieure et en second lieu des moyens d'accrochage 12 associés rigidement au second cadre 8 à sa partie normalement inférieure. Les moyens support 11 et les moyens d'accrochage 12 sont destinés à coopérer avec un dispositif de montage 13, faisant également partie de la présente invention, utilisable seul ou en combinaison avec le dispositif de fixation 1, qui sera décrit ultérieurement.

Dans une forme d'exécution possible non limitative, le premier cadre 4 comporte un fer plat supérieur 14a, un fer plat inférieur 14b, normalement appliqués contre la paroi 3, de directions générales horizontales et deux profilés 15 de directions générales verticales rigidement associés aux fers plats 14a, 14b et reliant deux extrémités libres correspondantes de ceux-ci.

Les moyens de fixation 5 se présentent par exemple sous la forme de deux encoches supérieures 16a et deux encoches inférieures 16b, tournées vers le bas, respectivement découpées dans les fers plats 14a, 14b. Ces encoches sont destinées à recevoir tout organe d'ancrage approprié 17 (figure 7).

Les premiers moyens de guidage 6 sont par exemple des moyens de guidage femelle résultant de la forme particulière donnée au profilé 15. A cet effet, le profilé 15 peut comporter une semelle 18 normalement appliquée sur les fers plats 14a, 14b et deux ailes 19, parallèles entre elles, écartées transversalement l'une de l'autre, rigidement associées à la semelle 18 notamment perpendiculairement, définissant un espace libre 20 accessible par une ouverture frontale 21. L'espace libre 20 est de direction générale verticale et définit donc les premiers moyens de guidage 6.

Les moyens d'arrêts 7a, 7b sont par exemple des tourillons 22 d'axe 22a, horizontal et perpendiculaire aux ailes 19, fixé au profilé 15, notamment aux ailes 19 par tout moyen approprié notamment des écrous 23 s'appliquant sur les faces externes des ailes 19. Les tourillons 22 associés aux moyens d'arrêt supérieurs 7a et inférieurs 7b sont placés respectivement à la partie supérieure et à la partie inférieure du cadre 4 notamment au voisinage des fers plats 14a et 14b.

Préférentiellement, comme illustré, les moyens d'arrêt supérieur 7a comportent deux paires de tourillons 22 respectivement haut et bas écartés les uns des autres.

Selon une première variante possible, les deux ailes 19 d'un profilé 15 vont en s'écartant l'une de l'autre depuis le fond de l'espace libre 20 jusqu'à l'ouverture frontale 21.

Selon une autre variante possible susceptible de venir en combinaison avec la précédente, les deux ailes 19 d'un profilé 15 vont en s'écartant l'une de l'autre dans la partie extrême libre inférieure de ce profilé 15 comme illustré sur la figure 1.

Les moyens support 11 lorsqu'ils sont prévus se présentent par exemple sous la forme d'une patte 24, horizontale associée rigidement au fer plat supérieur 14a, faisant saillie de ce dernier dans le sens frontal (c'est-à-dire dans le même sens que les ailes 19), percée d'un trou 25.

Naturellement, on conçoit que le premier cadre ou bâti 4 puisse faire l'objet de nombreuses autres variantes. Notamment, il peut avoir une forme générale de T, droit ou renversé, I, H, M, N, etc., on conçoit aussi que les moyens 5, 6, 7a, 7b sont susceptibles d'autres formes d'exécution.

Dans une forme d'exécution possible, le second cadre 8 comprend une partie supérieure 26a et une partie inférieure 26b chacune d'elle comprenant une bande 27 associée à la charge 2.

Les seconds moyens de guidage 9 se présentent par exemple sous la forme de plaquettes 28 susceptibles de venir se loger avec un faible jeu transversal dans l'espace libre 20 en pénétrant par l'ouverture 21. Il est donc prévu deux plaquettes 28 verticales et parallèles entre elles pour la partie supérieure 26a et deux plaquettes 28 coplanaires aux précédentes et associées à la partie inférieure 26b. Naturellement, l'écartement entre les deux plaquettes 28 d'une partie supérieure 26a ou inférieure 26b correspond à l'écartement entre les deux espaces libres 20 des deux profilés 15. Egalement, l'écartement entre la partie supérieure 26a et la partie inférieure 26b est au plus égal à la longueur du profilé 15.

Les moyens de blocage et verrouillage supérieurs 10a se présentent sous la forme d'une première saillie dirigée verticalement et vers le haut, prolongeant vers l'arrière de chaque plaquette 28 associée à la partie supérieure 26a et définissant une encoche supérieure 29a ouverte vers le haut et limitée d'une par par ladite saillie et d'autre part par le champ de la plaquette 28 associée, avec laquelle coopère le tourillon 22, notamment haut, des moyens d'arrêt 7a. Lorsque les moyens d'arrêt 7a comportent aussi un tourillon 22 (cas de figure), les moyens 10a comportent une saillie 42 dirigée verticalement et vers le bas à l'opposé de la première saillie.

Les moyens de blocage et de verrouillage inférieurs 10b comprennent également une saillie dirigée verticalement et vers le bas du même type général que celle déjà décrite, définissant une encoche inférieure 29b ouverte vers le bas.

Préférentiellement, les rampes des saillies des moyens 10a, 10b coopérant avec les tourillons 22 bas des moyens d'arrêt supérieurs 7a et des moyens d'arrêt inférieurs 7b sont inclinées de bas en haut et de la semelle 28 vers l'ouverture 21 de manière à réaliser un blocage par coin par simple gravité.

Pour des raisons qui seront vuesultérieurement, la hauteur de l'encoche supérieure 29a est préférentiellement plus grande que celle de l'encoche inférieure 29b.

Les moyens d'accrochage 12 lorsqu'ils sont prévus, comportent préférentiellement deux ensembles distincts associés respectivement à la partie supérieure 26a et à la partie inférieure 26b, chacun de ces ensembles prenant la forme d'une saillie 30 percée d'un trou 31 de direction générale verticale, susceptible de venir au moins sensiblement en alignement avec le trou 25 lorsque les seconds moyens de guidage 9 coopèrent avec les premiers moyens de guidage 6.

Naturellement, le second cadre 8 peut également faire l'objet de nombreuses variantes de manière à être adapté à la forme du premier cadre 4. Egalement, il est clair que les moyens 9, 10, a, b et 12 peuvent faire l'objet de nombreuses formes d'exécution possibles.

L'association d'une charge 2 pourvue du second cadre 8 sur un premier cadre 4 fixé préalablement à une paroi 3 est réalisée de la manière suivante; on présente la charge 2 de manière que les seconds moyens de guidage 9 soient placés en regard des premiers moyens de guidage 6. On fait coopérer les moyens de guidage 6 et 9 en faisant pénétrer les plaquettes 28 dans les espaces libres 20 par les ouvertures 21. Par un mouvement combiné de translation transversale ascendante, et de pivotement vers le bas et vers l'arrière, on amène les saillies des moyens de blocage et verrouillage supérieurs 10a à coopérer avec les moyens d'arrêt supérieurs 7a. Plus précisément, on amène ces saillies d'abord en regard de l'espace libre existant entre le tourillon 22 des moyens d'arrêt supérieurs 7a et la semelle 18. Puis on fait coulisser ces saillies verticalement et vers le haut jusqu'à ce que les tourillons 22 des moyens d'arrêt supérieurs 7a viennent en blocage sur les champs supérieurs des plaquettes 28 de la partie supérieure 26a. On peut alors laisser la charge 2 coulisser verticalement et vers le base, les saillies des moyens de blocage et verrouillage inférieurs 10b se présentent d'abord devant l'espace libre existant entre les tourillons 22 des moyens d'arrêt inférieurs 7b et la semelle 18 et pénétrant ensuite dans cet espace jusqu'à ce que les tourillons 22 viennent en blocage sur les champs inférieurs des plaquettes 28 de la partie inférieure 26b. Compte tenu de l'écartement existant entre les tourillons 22 des moyens d'arrêts supérieurs 7a et inférieurs 7b d'une part et de l'écartement entre les plaquettes 28 de la partie supérieure 26a et inférieure 26b et de la longueur des saillies des moyens de blocage supérieurs 10a et inférieurs 10b, on atteint la situation illustrée à la figure 7 où les moyens d'arrêt supérieurs 7a coopèrent avec les moyens de blocage et verrouillage supérieurs 10a et les moyens d'arrêt inférieurs 7b avec les moyens de blocage et verrouillage inférieurs 10b. Dans cette position, la charge 2 est associée rigidement au premier cadre 1 donc à la paroi verticale 3.

Il résulte de ce qui précède que la mise en place de la charge 2 suppose un déplacement de celle-ci. A cet effet, on prévoit, pour faciliter le montage d'utiliser le dispositif 13 suivant l'invention, quil outre cette utilisation particulière peut faire l'objet d'autres applications.

Ce dispositif de montage 13 illustré par la figure 8 comprend un support rigide 32 par exemple sous la forme générale d'un tube, formant une ligne totalement ou partiellement plane, ou gauche, rectiligne ou curviligne, déformable ou non, extensible ou non, monobloc ou non, terminé d'une part par une partie extrême de tête 33 et d'autre part par une partie extrême de pied 34. Le dispositif de montage 13 comporte en outre un organe de liaison 35 souple et inextensible, par exemple un câble métallique, associé au support 32, par exemple logé dans le tube constitué par celui-ci, pour pouvoir coulisser le long du support.

En troisième lieu, le dispositif de montage 13 comporte un organe de blocage 36, associé à la partie extrême libre de tête 37 de l'organe de liaison 35, émergeant de la partie de tête 33 du support 32.

En quatrième lieu, le dispositif de montage 13 comporte un organe de stockage 38 de l'organe de liaison 35 fixé au support 32 notamment à sa partie extrême de pied 34. Cet organe de stockage 38 prend par exemple la forme d'un tambour autour duquel est enroulé le câble constituant l'organe de liaison 35, supporté par une sorte de chape 39 associé rigidement au support 32.

Enfin, le dispositif de montage 13 comporte des moyens de commande 40 amovibles ou non, intégrés ou non à demeure au dispositif, susceptibles d'être associés cinématiquement à l'organe de stockage 38 pour commander le coulissement de l'organe de liaison 35 dans un sens ou dans l'autre ou au contraire le blocage de cet organe de liaison. Les moyens de commande 40 sont par exemple manuels et constitués par exemple d'une manivelle ou électriques et constitués alors par un moteur par exemple.

Naturellement, le dispositif de montage 13 peut comporter des moyens de préhension tels qu'une poignée 41 prolongeant le support 32 à sa partie extrême libre de pied 34.

Dans la forme d'exécution illustrée par le dessin, le support 32 a une forme générale de L renversé comprenant des tronçons rectilignes et des tronçons en coude. Cette disposition, particulière, permet le logement commode d'une charge 2 même volumineuse.

L'organe de blocage 36 se présente par exemple sous la forme d'un écrou venant se visser dans un filetage de la partie extrême libre de tête 37 de l'organe de liaison 35.

La mise en oeuvre du dispositif de montage 13 dans le cas particulier d'un dispositif de fixation tel que celui décrit précédemment est illustré en référence à la figure 7. On vient appliquer la partie extrême libre de tête du support libre rigide 32 sur les moyens support 11 c'est-à-dire la patte 24. L'organe de liaison 35 peut traverser le trou 25 et les trous 31 des moyens d'accrochage 12. Ultérieurement, l'écrou de l'organe de blocage 36 est mis en place sur le filetage. Il est clair que la mise en oeuvre des moyens de commande 40 permet selon les besoins de soulever ou d'abaisser la charge 2, à la vitesse désirée et de la distance souhaitée.

Suivant une forme d'exécution illustrée par la figure 9, il est prévu associé au dispositif de fixation et au dispositif de montage, des moyens de démultiplication de l'effort. Dans une forme d'exécution possible, ces moyens de démultiplication de l'effort comprennent deux poulies associées au premier cadre 4 et une poulie intermédiaire associée au second cadre 8. L'organe de liaison 35 est fixé à sa partie extrême libre de tête 37 au premier cadre 4.

Dans une autre forme d'exécution possible illustrée par la figure 10, le premier cadre 4 comporte seulement une glissière verticale. Le blocage de la charge 2 est alors assuré aux moyens de dispositifs latéraux tels que tirants.

**Revendications**

1. Dispositif de fixation (1) amovible d'une charge (2), notamment un appareil sanitaire sur une paroi verticale (3), notamment un mur, comportant en premier lieu un premier cadre ou bâti (4) rigide, plan, pouvant être associé rigidement à la paroi (3), pourvu de premiers moyens de guidage (6) normalement verticaux et de moyens d'arrêt respectivement supérieurs (7a) et inférieurs (7b) interposés sur les premiers moyens de guidage (6) et, en second lieu, un second cadre ou bâti (8) rigide associé rigidement à la charge, pourvu de seconds moyens de guidage (9) complémentaires des premiers moyens de guidage (6) et susceptibles de coopérer avec eux sur une certaine course de coulissement vertical, ainsi que des moyens de blocage et de verrouillage respectivement supérieurs (10a) et inférieurs (10b) associés aux seconds moyens de guidage (9) susceptibles de coopérer respectivement avec les moyens d'arrêt supérieurs et inférieurs pour retenir en place la charge, caractérisé par le fait qu'il comporte en outre et en premier lieu des moyens support (11) associés rigidement au premier cadre (4) à sa partie supérieure et en second lieu des moyens d'accrochage (12) associés rigidement au second cadre ou bâti (8) à sa partie normalement inférieure, les moyens support (11) et les moyens d'accrochage (12) étant destinés à coopérer avec un dispositif de montage (13).

2. Dispositif de fixation selon 1, dont les premiers moyens de guidage comprennent au moins un profilé ayant deux ailes définissant entre elles un espace libre, caractérisé par le fait que les seconds moyens de guidage (9) se présentent sous la forme d'au moins deux plaquettes (28) susceptibles de venir se loger dans l'espace libre (20), ces plaquettes étant prolongées par des saillies définissant des encoches respectivement supérieures (29a) et inférieure (29b) constituant les moyens de blocage et de verrouillage (10a, 10b).

3. Dispositif de fixation suivant 1 et 2, caractérisé par le fait que les encoches supérieures (29a) sont plus hautes que les encoches inférieures (29b).

4. Dispositif de fixation selon 1 à 3, caractérisé par le fait que les moyens d'arrêt (7a, 7b) comprennent chacun un tourillon (22) fixé transversalement au profilé (15) dans l'espace libre (20).

5. Dispositif de fixation selon 1 à 4, caractérisé par le fait que les moyens d'arrêt supérieurs (7a) comportent deux paires de tourillons (22) écartés l'un de l'autre.

6. Dispositif de fixation selon 1 à 5, caractérisé par le fait que les moyens de blocage supérieurs (10a) comportent en outre une saillie (42) dirigée verticalement vers le bas.

7. Dispositif de fixation selon 1 à 6, caractérisé par le fait que les saillies des moyens de blocage (10a), (10b) sont à rampe inclinée.

8. Dispositif de fixation selon 1 à 7, caractérisé par le fait que les moyens support (11) se présentent sous la forme d'une patte (24) comportant un trou 25 et les moyens d'accrochage (12) sous la forme d'au moins une saillie (30) comportant un trou (31) susceptible de venir en regard du trou (25).

9. Dispositif de montage d'un dispositif de fixation comprenant un organe de liaison souple et inextensible (35), un organe de stockage (38) de l'organe de liaison et des moyens de commande (40) amovibles ou non, susceptibles d'être associés à l'organe de stockage (38) pour commander le stockage, le déstockage ou le blocage de cet organe de liaison, caractérisé par le fait qu'il comporte également un support rigide (32) terminé d'une part par une partie extrême libre de tête (33) et d'autre part par une partie extrême libre de pied (34); le support rigide (32) étant associé à l'organe de liaison (35) à coulissement réciproque longitudinal et un organe de blocage (36) associé à la partie extrême libre de tête (37) de l'organe de liaison (35); l'organe de stockage (38) étant fixé au support rigide (32) à la partie extrême libre de pied (34) et commandant le coulissement de l'organe de liaison (35) en appui sur le support rigide (32).

10. Dispositif de montage selon 9, caractérisé par le fait que l'organe de blocage (36) comporte un filetage en partie extrême libre (37) de l'organe de liaison (35) avec lequel peut coopérer cet écrou.

11. Dispositif de montage selon 9 et 10, caractérisé par le fait que l'organe de stockage (38) se présente sous la forme d'un tambour.

12. Dispositif de montage selon 9 à 11, caractérisé par le fait qu'il est appliqué à un dispositif de fixation suivant l'une quelconque des revendications 1 à 8, la partie de tête (33) du support (32) venant s'appliquer sur les moyens support (11) et l'organe de blocage (36) venant s'appliquer sur les moyens d'accrochage (12).

**Patentansprüche**

1. Lösbare Vorrichtung (1) zum Befestigen einer Last (2), insbesondere einer sanitären Einrichtung, an einer senkrechten Wand oder Wandung (3), bestehend an erster Stelle aus einem starren und flachen ersten Rahmen oder Gestell (4), der bzw. das fest an der Wand (3) angebracht werden kann und normalerweise senkrechte erste Führungen (6) und obere und untere zwischen den ersten Führungen (6) liegende Blockierungen (7a bzw. 7b) aufweist, und an zweiter Stelle aus einem mit der Last unbeweglich starr verbundenem zweiten Rahmen oder Gestell (8), der bzw. das mit zweiten, die ersten Führungen (6) ergänzenden Führungen (9) versehen ist und mit letzteren auf einer bestimmten senkrechten Führungsbahn gleitend zusammenarbeiten kann, und aus mit den zweiten Führungen (9), die zum Halten der Last mit den oberen bzw. unteren Blockierungen zusammenarbeiten, verbundenen oberen (10a) bzw. unteren (10b) Blockierungen oder Verriegelungen, gekennzeichnet en erster Stelle durch Träger (11), die mit dem ersten Rahmen (4) an seinem oberen Teil starrverbunden sind, und an zweiter Stelle durch Einhakmittel (12), die mit dem zweiten Rahmen oder Gestell (8) an seinem normalerweise unteren Teil starrverbunden sind, wobei die Träger (11) und die Einhakmittel (12) der Zusammenarbeit mit einer Montagevorrichtung (13) dienen.

2. Vorrichtung nach Anspruch 1, deren erste Führungen zumindest einen Profilstahl mit zwei Schenkeln aufweist, die zwischen sich einen freien Raum beschreiben, dadurch gekennzeichnet, daß die zweiten Führungen (9) in Form von zumindest zwei Plättchen (28) ausgebildet sind, die sich in den freien Raum (20) einfügen, wobei die Plättchen durch Vorsprünge verlängert sind, die obere bzw. untere Absätze (29a bzw. 29b) beschreiben und die Blockierungen oder Verrigelungen (10a, 10b) darstellen.

3. Vorrichtung nach den Ansprüchen 1 und 2, dadurch gekennzeichnet, daß die oberen Absätze (29a) höher sind als die unteren Absätze (29b).

4. Vorrichtung nach den Ansprüchen 1 bis 3, dadurch gekennzeichnet, daß die Blockierungen (7a, 7b) jeweils einen Lagerzapfen (22) aufweisen, der im freien Raum (20) am Profilstahl (15) querlaufend befestigt ist.

5. Vorrichtung nach den Ansprüchen 1 bis 4, dadurch gekennzeichnet, daß die obere Blockierung (7a) zwei räumlich voneinander getrennte Lagerzapfenpaare (22) aufweist.

6. Vorrichtung nach den Ansprüchen 1 bis 5, dadurch gekennzeichnet, daß die obere Verriegelung (10a) darüber hinaus einen Vorsprung (42) aufweist, der senkrecht nach unten gerichtet ist.

7. Vorrichtung nach den Ansprüchen 1 bis 6, dadurch gekennzeichnet, daß die Vorsprünge der Verriegelungen (10a, 10b) eine geneigte Ebene darstellen.

8. Vorrichtung nach den Ansprüchen 1 bis 7, dadurch gekennzeichnet, daß die Träger (11) ausgestaltet sind in Form eines Befestigungseisens (24), das ein Loch (25) und Einhakmittel (12) in Form zumindest eines Vorsprungs (30) aufweist, in den zumindest ein Loch (31) eingelassen ist, das mit dem Loch (25) zur Deckung gebracht werden kann.

9. Vorrichtung zum Einbauen oder Montieren einer Befestigungsvorrichtung bestehend aus einem nachgiebigen und unausdehnbaren Verbindungsteil (35) und einem Lagerungsteil (38) des Verbindungsteils und der Steuerungen (40), die lösbar sind oder nicht und die mit dem Lagerungsteil (38) zum Steuern der Lagerung, der Entlagerung oder der Blockierung des Verbindungsteils verbunden werden können, gekennzeichnet durch einen starren Träger (32), der einerseits in einen äußersten freien Kopfteil (33) und andererseits in einen äußersten freien Fußteil (34) ausläuft und der mit dem längsläufig hin- und hergleitend geführten Verbindungsteil (35) verbunden ist, mit dessen äußersten freien Kopfteil (37) ein Blockierungs- oder Verriegelungsteil (36) verbunden ist, und durch das Lagerungsteil (38), das am starren Träger (32) mit dem äußersten freien Fußteil (34) befestigt ist und die gleitende Führung des Verbindungsteils (35) steuert, das am starren Träger (32) aufliegt.

10. Vorrichtung nach Anspruch 9, dadurch gekennzeichnet, daß das Blockierungsteil (36) am äußersten freien Abschnitt (37) des Verbindungsteils (35) ein Gewinde trägt, über das die Mutter geführt werden kann.

11. Vorrichtung nach Anspruch 9 und 10, dadurch gekennzeichnet, daß das Lagerungsteil (38) in Form einer Trommel ausgebildet ist.

12. Vorrichtung nach den Ansprüchen 9 bis 11, dadurch gekennzeichnet, daß sie mit einer Befestigungsvorrichtung nach einem der Ansprüche 1 bis 8 anwendbar ist, wobei der Kopfteil (33) des Trägers (32) an den tragenden Mitteln (11) und das Blockierungsteil (36) an den Einhakmitteln zur Anwendung kommen.

**Claims**

1. Device for rigid attachment (1) of a load (2), particularly a sanitary apparatus on a vertical wall (3) especially a wall consisting in the first place of a first rigid frame (4), of smooth surface capable of being rigidly associated with the wall (3), provided with first normally vertical guide units, and with upper (7a) and lower (7b) means of arrest, interposed on the first guide pieces (6) and, in the second place, a second rigid frame or structure (8) rigidly associated with the load, provided with a second set of guide units (9) complementary to the first guide units (6) and capable of operating with them along the path for a certain vertical running motion, as well as respectively upper (10a) and lower (10b) blocking and locking facilities associated with the second set of guide units (9) capable of operating respectively with the upper and lower means of arrest to hold the load in position, characterized by the fact that it also comprises in the first place means of support (11) rigidly associated with the first frame (4) at the top of the latter and in the second place, facilities (12) rigidly associated with the second frame or structure (8), at what is normally its lowest point, the means of support (11) and the coupling facilities (12) being intended to work with a mounting device (13).

2. Attachment device in accordance with 1, of which the first guide units include at least one section having two wings between them defining a free space, characterized by the fact that the second set of guide pieces (9) takes the form of at least two small plates (28) capable of fitting within the free space (20) such small plates being extended by protrusions defining respectively the upper (29a) and lower (29b) slots constituting the means of blocking and locking (10a, 10b).

3. Attachment device in accordance with 1 and 2, characterized by the fact that the upper slots (29a) are higher than the lower slots (29b).

4. Attachment device in accordance with 1 and 3 characterized by the fact that the means of arrest (7a, 7b) each contain a swivel pin (22) fixed transversely to the section (15) in the free space (20).

5. Attachment device in accordance with 1 to 4 characterized by the fact that the upper means of arrest (7a) comprises two pairs of pivots (22) separated one from the other.

6. Attachment device in accordance with 1 to 5 characterized by the fact that the upper means of blocking (10a) also include a projection (42) pointing vertically downwards.

7. Attachment device in accordance with 1 to 6 characterized by the fact that the projections from the means of blocking (10a), (10b) are in an inclined plane.

8. Attachment device in accordance with 1 to 7, characterized by the fact that the means of support (11) are in the form of a foot (24) comprising a hole 25 and the means of coupling (12) in the form of at least one projection (30) including a hole (31) which can be brought opposite the hole (25).

9. Mounting device for an attachment device comprising a flexible and extensible connecting unit (35) a storage unit (38) for the connecting unit and control facilities (40) whether immovable or not (40) capable of being associated with the storage unit (38) to control the storage release from storage and blockage of such connecting unit, characterized by the fact that it also includes a rigid support (32) terminating on the one hand, in one extremity at the head (33) and on the other hand in a free extremity at the foot (34); the rigid support (32) being associated with the connecting unit (35) with reciprocal longitudinal sliding motion and a blocking unit (36) associated with the extremity at the head (37) of the connecting unit (35); the storage unit (38) being attached to the rigid support (32) at the free extremity at the foot (34) and controlling the sliding motion of the connecting unit (35) by resting upon the rigid support (32).

10. Mounting device in accordance with 9 characterized by the fact that the blocking unit (36) includes threading at the free end (37) of the connecting unit (35) with which this screw may engage.

11. Mounting device in accordance with 9 and 10, characterized by the fact that the storage unit (38) is in the form of a drum.

12. Mounting device in accordance with 9 to 11, characterized by the fact that it is applied to an attachment device in accordance with any one of claims 1 to 8, the part at the head (33) of the support (32) resting on the means of support (11) and the blocking unit (36) resting on the coupling facility (12).

FIG. 1

FIG. 2

FIG. 3

FIG. 5

FIG. 4

FIG. 6

FIG. 7

0020 276

FIG. 8

FIG. 9

FIG. 10